# EUROPEAN PATENT APPLICATION

(11) **EP 3 657 316 A1**
(43) Date of publication of application: **27.05.2020**
(21) Application number: 18835791.7
(22) Date of filing: 16.07.2018
(51) Int. Cl.: G06F 3/14

(54) **METHOD AND SYSTEM FOR DISPLAYING VIRTUAL DESKTOP DATA**

(30) Priority: 17.07.2017 CN 201710581019
(71) Applicant: ZTE Corporation, Shenzhen, Guangdong 518057 (CN)
(72) Inventor: LIU, Shaohua, Shenzhen Guangdong 518057 (CN)
(74) Representative: Iannone, Carlo Luigi
(86) International application number: PCT/CN2018/095764
(87) International publication number: WO 2019/015543

(57) **Abstract**

Provided are a method and system for displaying virtual desktop data. The method includes that a server divides (S101) the virtual desktop into a plurality of virtual desktop blocks of equal size according to resolution of the virtual desktop, each virtual desktop block corresponds to a small desktop stream and multiple small desktop frames; the server performs compressed encoding (S102) on the small desktop frames corresponding to each virtual desktop block to encapsulate the small desktop frames into small stream frames corresponding to the small desktop stream; and the server sends (S103) the small stream frames to a client so that the client reproduces each frame of picture of the virtual desktop of the server by performing a decompression process, an integration process and a displaying process on the small stream frames received.

## Description

### TECHNICAL FIELD

The present disclosure relates to the field of wireless communication technologies and, in particular, to a method and system for displaying virtual desktop data.

### BACKGROUND

The cloud desktop system is an important achievement of the cloud computing technology which is increasingly widely used in the fields of government, enterprise, education, etc. The fluency of cloud-desktop operations directly affects the user experience and is the most basic and important performance indicator of the cloud desktop system. The user of each cloud client logs in to his or her own cloud desktop. The fluency of desktop operations needs to be ensured. The fluency is limited by two basic conditions: network bandwidth and hardware performance of the server, especially the processing power of the Central Processing Unit (CPU).

At present, mainstream desktop-data display solutions on the market are as described below.

The first solution is sending the desktop data to the cloud client without performing any processing on the desktop data or sending the desktop data to the cloud client after a simple compressed encoding (such as Mjpeg) is performed on the desktop data. Due to a lack of compression or a relatively-low compression ratio, the server has a relatively low pressure on the CPU. In the case of sufficient network bandwidth, the desktop data can be quickly sent to the client so as to be processed and can be easily processed by the client (decoding and decompression is quick or not necessary at all). The disadvantages of the first solution are also easily noticed. That is, requirements for network bandwidth are too high due to the relatively large amount of transmitted desktop data. Additionally, since one server host is mapped onto several virtual cloud desktops, multiple users logging on to the cloud desktop simultaneously necessarily preempt the network bandwidth. As a result, the transmission rate of the desktop data is limited and problems like delay or jitter of desktop operations occur.

The second solution is encoding the picture (desktop frame) of data of the entire desktop at a high compression ratio (like H264/H265) and then sending the picture to the client. Since having been highly compressed, the amount of desktop data is reduced significantly and the bandwidth occupancy is also reduced significantly. The disadvantage of the second solution is that encoding at a high compression ratio is a heavy burden to the CPU of the server and poses a great challenge to the time consumption capability and the efficiency capability of decoding and decompression of the client.

### SUMMARY

The following is the summary of the subject matter described herein in detail. This summary is not intended to limit the scope of the claims.

A method and system for displaying virtual desktop data are provided in embodiments of the present disclosure to solve the problem in which encoding of the picture (desktop frame) of data of the entire desktop by the server at a high compression ratio results in a heavy burden to the CPU, has high requirements for the decoding and decompression capability of the client and causes the client to have low decoding and decompression efficiency.

According to embodiments of the present disclosure, a method for displaying virtual desktop data is provided.

The method includes that a server divides the virtual desktop into a plurality of virtual desktop blocks of equal size according to resolution of the virtual desktop, where each of the virtual desktop blocks corresponds to a small desktop stream and multiple small desktop frames; the server performs compressed encoding on the small desktop frames corresponding to each of the virtual desktop blocks to encapsulate the small desktop frames into small stream frames corresponding to the small desktop stream; and the server sends the small stream frames to a client so that the client reproduces each frame of virtual desktop picture of the server by performing a decompression process, an integration process and a displaying process on the small stream frames received.

According to embodiments of the present disclosure, a system for displaying virtual desktop data is provided. The system includes a server and a client.

The server includes a division module, which is configured to divide the virtual desktop into a plurality of virtual desktop blocks of equal size according to resolution of the virtual desktop, where each of the plurality of virtual desktop blocks corresponds to a small desktop stream and multiple small desktop frames; an compressed encoding module, which is configured to perform compressed encoding on the small desktop frames corresponding to each of the plurality of virtual desktop blocks to encapsulate the small desktop frames into small stream frames corresponding to the small desktop stream; and a sending module, which is configured to send the small stream frames to the client so that the client reproduces each frame of virtual desktop picture of the server by performing a decompression process, an integration process and a displaying process on the small stream frames received.

According to embodiments of the present disclosure, a computer-readable storage medium is further provided. The storage medium stores computer-executable instructions which, when executed by a processor, cause the processor to perform the preceding method.

Other aspects can be understood after the accompanying drawings and detailed description are read and understood.

### BRIEF DESCRIPTION OF DRAWINGS

FIG. 1 is a flowchart of a method for displaying virtual desktop data according to embodiments of the present disclosure;
FIG. 2 is a schematic diagram of a system for displaying virtual desktop data according to embodiments of the present disclosure;
FIG. 3 is a structure diagram of a system for displaying virtual desktop data according to embodiments of the present disclosure;
FIG. 4 is a flowchart of stream data generation at a server side according to embodiments of the present disclosure; and
FIG. 5 is a flowchart of multiple streams processing at a client side according to embodiments of the present disclosure.

### DETAILED DESCRIPTION

Exemplary embodiments of the present disclosure will be described below in detail in conjunction with the drawings. It is to be understood that the exemplary embodiments described below are intended to illustrate and explain and not to limit the present disclosure.

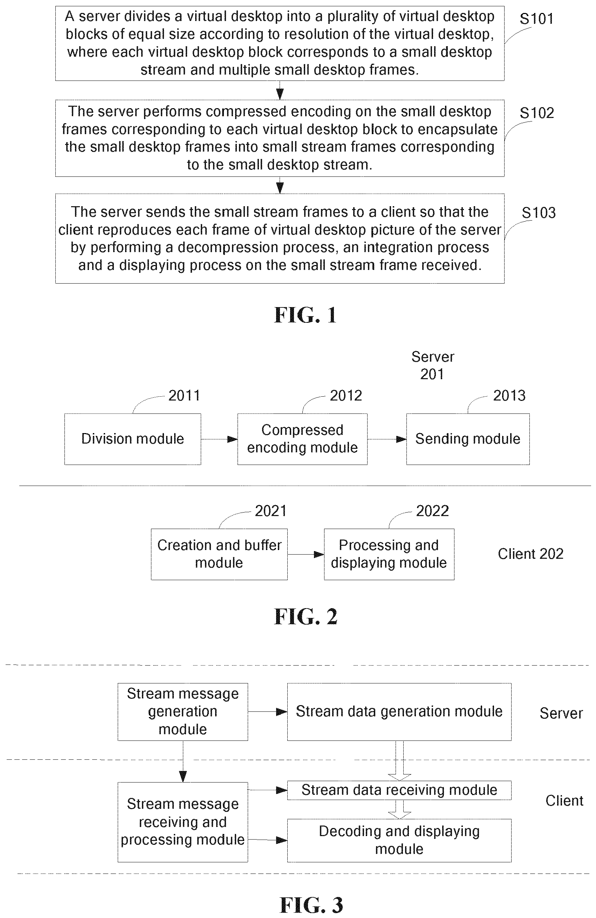

FIG. 1 is a flowchart of a method for displaying virtual desktop data according to embodiments of the present disclosure. As shown in FIG. 1, the method includes steps described below.

In step S101, a server divides the virtual desktop into a plurality of virtual desktop blocks of equal size according to resolution of the virtual desktop, where each virtual desktop block corresponds to a small desktop stream and multiple small desktop frames.

One desktop picture in each desktop block region is one small desktop frame. Small desktop frames in different desktop block regions belong to different small desktop streams.

In step S102, the server performs compressed encoding on the small desktop frames corresponding to each virtual desktop block to encapsulate the small desktop frames into small stream frames corresponding to the small desktop stream.

Each small stream frame contains information about the small desktop stream to which the small stream frame belongs, such as a stream ID.

In step S103, the server sends the encapsulated small stream frames to a client so that the client reproduces each frame of virtual desktop picture of the server by performing a decompression process, an integration process and a displaying process on the small stream frames received.

After the server sends the encapsulated small stream frames to the client, the method further includes the following steps: the server detects a current frame of desktop picture of each virtual desktop block to determine whether the current frame of desktop picture of the virtual desktop block differs from a previous frame of desktop picture of said virtual desktop block; and the server performs compressed encoding on the small desktop frames corresponding to each virtual desktop block to encapsulate the small desktop frames into the small stream frames corresponding to the small desktop stream and sends the small stream frames to the client if it is determined that the current frame of desktop picture of the virtual desktop block differs from the previous frame of desktop picture of the virtual desktop block.

The server performs compressed encoding on the small desktop frames corresponding to each virtual desktop block in the following manner: the server creates an compressed encoding thread and an encoder for each virtual desktop block according to the plurality of virtual desktop blocks; and the server performs compressed encoding on the small desktop frames corresponding to each virtual desktop block by using the compressed encoding thread and the encoder created for each virtual desktop block.

The client receives the small stream frames and reproduces each frame of virtual desktop picture of the server by performing a decompression process, an integration process and a displaying process on the small stream frames received in the following manner: the client creates a decoding-displaying thread and a decoder for the small stream frames, and sends the received small stream frames to a corresponding buffer queue; and the client performs a decompression process, an integration process and a displaying process on the small streams frames in the corresponding buffer queue by using the decoding-displaying thread and the decoder created for the small stream frames to reproduce each frame of virtual desktop picture of the server.

The client performs a decompression process, an integration process and a displaying process on the small stream frames in the corresponding buffer queue by using the decoding-displaying thread and the decoder created for the small stream frame in the following manner: the client retrieves the small stream frames from the corresponding buffer queue by using the decoding-displaying thread created for the small stream frame, and performs the decompression process on the small stream frames through the decoder to obtain desktop transcoded data corresponding to the small stream frames; and the client performs the integration process on all desktop transcoded data to obtain transcoded data of the entire virtual desktop and performs displaying process on the obtained transcoded data of the entire virtual desktop.

FIG. 2 is a schematic diagram of a system for displaying virtual desktop data according to embodiments of the present disclosure. As shown in FIG. 2, the system includes a server 201 and a client 202. The server 201 includes: a division module 2011 configured to divide the virtual desktop into a plurality of virtual desktop blocks of equal size according to resolution of the virtual desktop, where each of the plurality of virtual desktop blocks corresponds to a small desktop stream and multiple small desktop frames; a compressed encoding module 2012 configured to perform compressed encoding on the small desktop frames corresponding to each of the plurality of virtual desktop blocks to encapsulate the small desktop frames into small stream frames corresponding to the small desktop stream; and a sending module 2013 configured to send the encapsulated small stream frame to the client so that the client reproduces each frame of virtual desktop picture of the server by performing a decompression process, an integration process and a displaying process on the small stream frames received.

The sending module 2013 includes: a detection unit configured to detect a current frame of desktop picture of each virtual desktop block to determine whether the current frame of desktop picture differs from a previous frame of desktop picture; and a sending unit, if it is determined that the current frame of desktop picture of one of the virtual desktop blocks differs from the previous frame of desktop picture of the virtual desktop block, the server performs compressed encoding on the small desktop frames corresponding to the virtual desktop block to encapsulate the small desktop frames into the small stream frames corresponding to the small desktop stream, and the sending unit is configured to send the small stream frames to the client.

The compressed encoding module 2012 includes: a creation unit configured to create an compressed encoding thread and an encoder for each virtual desktop block according to the plurality of virtual desktop blocks; and an compressed encoding unit configured to perform compressed encoding on the small desktop frames corresponding to each virtual desktop block by using the compressed encoding thread and the encoder created for each virtual desktop block.

The client 202 includes: a creation and buffer module 2021 configured to create a decoding-displaying thread and a decoder for the received small stream frames, and send the received small stream frames to a corresponding buffer queue; and a processing and displaying module 2022 configured to perform a decompression process, an integration process and a display process on the small stream frames in the corresponding buffer queue by using the decoding-displaying thread and the decoder created for the small stream frames to reproduce each frame of virtual desktop picture of the server.

The processing and displaying module 2022 includes: a processing unit configured to retrieve the small stream frames from the corresponding buffer queue by using the decoding-displaying thread created for the small stream frame, and perform the decompression process on the small stream frames through the decoder to obtain desktop transcoded data corresponding to the small stream frames; and a displaying unit configured to perform an integration process on all desktop transcoded data to obtain transcoded data of the entire virtual desktop and perform a displaying process on the entire transcoded data of the virtual desktop.

FIG. 3 is a structure diagram of a system for displaying virtual desktop data according to embodiments of the present disclosure. As shown in FIG. 3, the system includes a server and a client. The server includes a stream message generation module and a stream data generation module. The client includes a stream message receiving and processing module, a stream data receiving module and a decoding and displaying module.

The stream message generation module is configured to form a control message related to the desktop stream. The control message mainly refers to a stream creation message and a stream destruction message.

Each of blocks of equal size corresponds to a small stream. Each small stream has its own stream creation message and stream destruction message.

The stream creation message includes the following information: a stream ID for distinguishing from other streams; region coordinates corresponding to the stream; picture pixel size; the number of blocks of the entire desktop; an encoding and decoding mode and the like.

The stream destruction message indicates the corresponding small-stream ID.

The stream data generation module is configured to divide the desktop into blocks, to perform compressed encoding on the picture of each block in a multi-thread manner, and then to perform encapsulation. The encapsulated data stream contains the following information: small desktop frame data; stream ID; the sequence number of the current desktop frame, and the number of small streams where the current frame has changes.

The stream message receiving and processing module is configured to receive and process a control message related to a stream of the server.

The stream message receiving and processing module receives the stream creation message and creates the respective stream objects. Each small-stream object contains its own region information, decoder, and data receiving and forwarding thread. The stream message receiving and processing module allocates a buffer space for storage of the transcoded data of the entire desktop. Small streams sequentially occupy space segments in the buffer space. After all the changed small stream frames are transcoded, the data in the entire buffer space is displayed.

The stream message receiving and processing module receives the stream destruction message and destroys resources like small streams, decoders and threads.

The stream data receiving module is configured to receive the small stream frames sequentially sent from the server end and send the small stream frames to the corresponding small stream frame buffer queues in real time.

The decoding and displaying module includes the decoding-displaying thread corresponding to each small stream. Through each thread, the small stream frames are retrieved from the corresponding frame buffer queue in real time and sent to the decoder for decoding and transcoding operations. After all the changed small stream frames of the entire desktop are decoded and transcoded, the transcoding buffer space is integrated and the data is displayed.

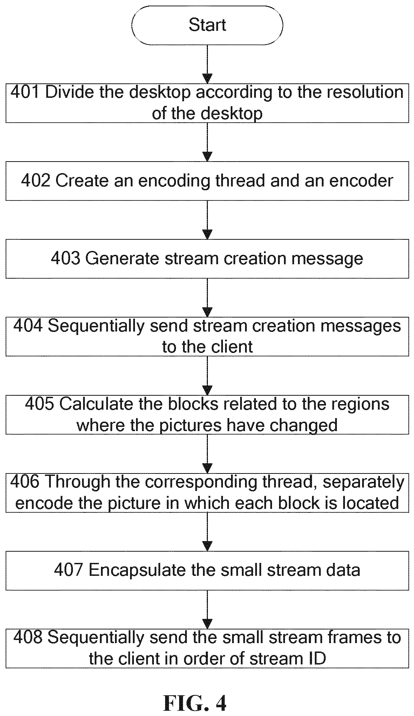

FIG. 4 is a flowchart of stream data generation at a server side according to embodiments of the present disclosure. As shown in FIG. 4, steps described below are included.

In step 401, an entire desktop is divided into a plurality of blocks of equal size according to the resolution of the desktop. For example, a 1440*900 desktop may be divided into 16 blocks in two rows and eight columns.

In step 402, a separate compressed encoding thread and a separate encoder are created for each block.

In step 403, a stream creation message is constructed for each block.

In step 404, the stream creation message of each block is encapsulated separately and sent to the client. The content of the message includes: stream ID; region coordinates corresponding to the stream; picture pixel size; the number of blocks of the entire desktop; encoding and decoding modes and the like.

In step 405, blocks in a region where the current frame of desktop picture differs from the previous frame of desktop picture are dynamically calculated.

In step 406, through the thread corresponding to the block where a change takes place, the compressed encoding is performed on the picture of the block.

In step 407, the small stream frames are encapsulated by using the preceding thread. The format of the small stream frames contains the following content: small desktop stream frame data; stream ID; the sequence number of the current desktop frame, and the number of small streams where the current frame changes.

In step 408, the small stream frames are sequentially sent to the client in order of stream ID.

According to the preceding process, the manner in which overall encoding is performed for the entire desktop is changed to the manner in which separate encoding is performed for each of several regions, thereby improving the encoding efficiency. At the same time, the number of small streams that have changed and the small-stream ID are marked in the small stream frame, thereby preventing disorder that occurs when the client processes multi-stream data.

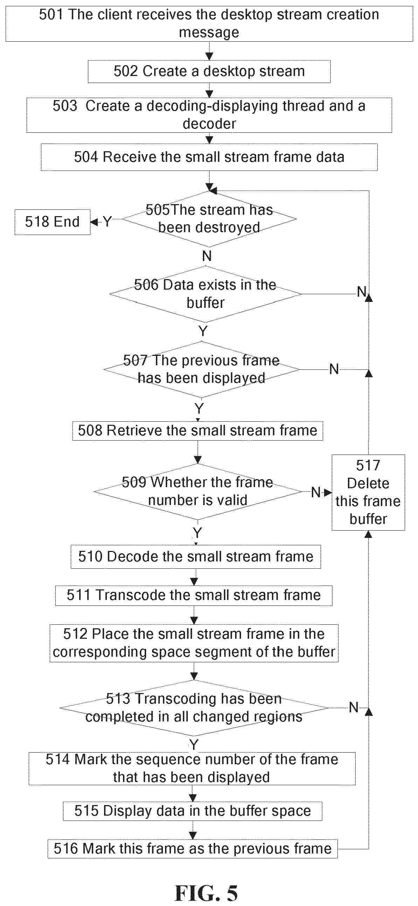

FIG. 5 is a flowchart of multiple streams processing at a client side according to embodiments of the present disclosure. As shown in FIG. 5, the following steps are included.

In step 501, a client receives and parses the small-stream creation message sent from the server. The client parses the small-stream creation message to obtain the encoding and decoding formats, the desktop pixel size, the number of blocks obtained by division, the stream ID, the region and position of a block and the like.

In step 502, the client creates a small-stream object according to the parsed related parameters.

In step 503, a decoding-displaying thread and a decoder corresponding to the steam object are created in the stream object, meanwhile, a buffer space is created to store the transcoded data of the entire desktop. Small streams sequentially occupy space segments in the buffer space. In addition, a buffer queue for storing small stream frame data is also established. The decoding-displaying thread runs during the creation. Through the decoding-displaying thread, small stream frame data is retrieved from the corresponding buffer queue in real time.

In step 504, the client receives a set of small stream frame data sent from the server. This set of stream data belongs to the same desktop frame and carries the frame sequence number and, meanwhile, the number of changed small streams of the desktop frame can be learned from the stream data. The small stream frame data in the stream data is placed in the corresponding buffer queue according to the stream ID.

In step 505, it is determined by the decoding-displaying thread whether the stream has been destroyed. If the stream has been destroyed, the thread directly exits.

In step 506, it is determined by the decoding-displaying thread whether data exists in the buffer; if no data exists in the buffer, the process pauses for a while and goes to step 505.

In step 507, it is determined, according to the sequence number of the marked previous frame, through the decoding-displaying thread whether the previous frame has been displayed. If the previous frame is not displayed, the process pauses for a while and goes to step 505. If the previous frame has been displayed, the process continues.

In step 508, the small stream frame is retrieved through the decoding-displaying thread from the buffer queue.

In step 509, the validity is determined according to the frame sequence number. If the small stream frame is invalid, the small stream frame is dropped and the process goes to step 505. If the small stream frame is valid, the process continues. The criterion for determining the validity is that the frame sequence number is compared with the sequence number N of the previously displayed frame. If the frame sequence number is greater than N, the small stream frame is valid. If the frame sequence number is not greater than N, the small stream frame is invalid.

In step 510, the small stream frame is sent to the decoder through the decoding-displaying thread so as to be decoded.

In step 511, the decoder transcodes the small stream frame.

In step 512, the transcoded small stream frame is placed in a corresponding segment in the buffer space of the desktop transcoded data.

In step 513, it is determined whether each changed small stream frame has been transcoded. If each changed small stream frame has been transcoded, the process continues; otherwise, the process goes to step 505.

In step 514, the decoder marks the sequence number of the current frame as the sequence number of the previously displayed frame, the sequence number is applied in step 509.

In step 515, the decoder displays the transcoded data of the entire desktop.

In step 516, the frame is marked as the previous frame through the decoding-displaying thread. This result is applied in step 507.

In step 517, the small stream frame buffer is deleted through the decoding-displaying thread, the memory resource is released, and the process skips to step 505.

In step 518, when the client receives a message indicating that the small stream is destroyed, the corresponding decoding-displaying thread exits, the decoder is destroyed, the buffer queue is released, and the small-stream object is also deleted.

According to embodiments of the present disclosure, a computer-readable storage medium is further provided. The storage medium stores computer-executable instructions which, when executed by a processor, cause the processor to perform the preceding method.

The present disclosure has the following beneficial effects: the mode of encoding at a high compression ratio ensures that the desktop frame reduces the consumption of bandwidth resources as much as possible during the network transmission process; under the multi-threading mechanism of the multi-stream scheme, the compressed encoding efficiency of the desktop frame is greatly improved and the CPU resources of the server are fully utilized; meanwhile, the multi-threading mechanism of the client also improves the efficiency of decoding and transcoding the desktop frame by the client; additionally, the small stream frame in the multi-stream scheme carries information about the sequence number of the desktop frame and carries the number of changed small stream frames and the stream ID, and the client only needs to decode and transcode the small stream frame, thereby alleviating the pressure of the client, and, in cooperation with the protection logic of the decoding-displaying thread, ensuring frame-by-frame display on the desktop and not causing picture disorder.

According to the solution provided in embodiments of the present disclosure, the server divides the picture (desktop frame) of the virtual desktop into a plurality of blocks of equal size according to the resolution of the desktop, and then dynamically encodes the picture of each block separately at a high compression ratio to form a plurality of small desktop data streams and sends the small desktop data streams to the client; the client decodes and transcodes the small stream frames separately and parallelly and finally displays all the decoded and transcoded small stream frames on the display device uniformly. Meanwhile, the server compares the current desktop frame with the previous desktop frame, marks the blocks that change relative to the previous desktop frame, and encodes only the pictures of changed blocks into small stream frames and sends the small stream frames to the client. Thus, the client only needs to perform decoding, transcoding and other operations of changed small stream frames and then performs displaying in combination with the part pf the previous desktop frame that have not changed, thereby alleviating the pressure of the client.

According to the solution provided in embodiments of the present disclosure, after the desktop frame is divided into several blocks, the data processing of the blocks can be completed in a multi-thread parallel manner. This facilitates full use of CPU resources, reduces the CPU usage, and improves the encoding efficiency. The same is true for the client. In addition, a small network bandwidth is occupied in the solution of the present disclosure, so the fluency of the desktop operation is comprehensively improved.

It is to be understood by those of ordinary skill in the art that all or some of the steps and systems in the methods disclosed herein and all or some of the function modules/units in the apparatuses disclosed herein may be implemented as software, firmware, hardware or a suitable combination thereof. In a hardware implementation, the division of the function modules/units described above does not necessarily correspond to the division of physical components. For example, one physical component may have multiple functions, or one function or step may be implemented by several physical components cooperatively. Some or all of the components may be implemented as software executed by a processor, such as a digital signal processor or a microprocessor, or may be implemented as hardware, or may be implemented as an integrated circuit, such as an application-specific integrated circuit. Such software may be distributed over computer-readable media. The computer-readable media may include computer storage media (or non-transitory media) and communication media (or transitory media). As is known to those of ordinary skill in the art, the term computer storage media include volatile and non-volatile as well as removable and non-removable media implemented in any method or technology for storing information (such as computer-readable instructions, data structures, program modules or other data). The computer storage media include, but are not limited to, RAM, ROM, EEPROM, flash memory or other memory technologies, CD-ROM, digital versatile disc (DVD) or other optical disc storage, magnetic cartridge, magnetic tape, magnetic disk storage or other magnetic storage devices, or any other medium used for storing the desired information and accessible by a computer. Moreover, it is known to those skilled in the art that communication media typically include computer-readable instructions, data structures, program modules or other data in a modulated data signal, such as a carrier wave or other transport mechanisms, and may include any information delivery medium.

Despite the present disclosure is described above in details, the present disclosure is not limited to the preceding detailed description, and those skilled in the art may make various modifications according to the principle of the present disclosure. Therefore, any modification made according to the principle of the present disclosure is construed to fall within the scope of the present disclosure.

## Claims

1. A method for displaying virtual desktop data, comprising:
dividing (S101), by a server, a virtual desktop into a plurality of virtual desktop blocks of equal size according to resolution of the virtual desktop, wherein each of the virtual desktop blocks corresponds to a small desktop stream and multiple small desktop frames;
performing compressed encoding (S102), by the server, on the multiple small desktop frames corresponding to each of the virtual desktop blocks to encapsulate the multiple small desktop frames into small stream frames corresponding to the small desktop stream; and
sending (S103) the small stream frames to a client from the server so that the client reproduces each frame of picture of the virtual desktop of the server by performing a decompression process, an integration process and a displaying process on the small stream frames received.

2. The method of claim 1, wherein after sending (S103) the small stream frames to a client from the server, the method further comprises:
detecting, by the server, a current frame of desktop picture of each of the virtual desktop blocks to determine whether the current frame of desktop picture of the virtual desktop block differs from a previous frame of desktop picture of said virtual desktop block; and
in response to determining that the current frame of desktop picture of one of the virtual desktop blocks differs from the previous frame of desktop picture of said virtual desktop block, performing compressed encoding, by the server, on the multiple small desktop frames corresponding to said virtual desktop block to encapsulate the multiple small desktop frames into the small stream frames corresponding to the small desktop stream, and sending the small stream frames to the client from the server,.

3. The method of claim 1 or 2, wherein performing compressed encoding, by the server, on the multiple small desktop frames corresponding to each of the virtual desktop blocks comprises:
creating, by the server, a compressed encoding thread and an encoder for each of the virtual desktop blocks according to the plurality of virtual desktop blocks; and
performing compressed encoding, by the server, on the multiple small desktop frames corresponding to each of the virtual desktop blocks by using the compressed encoding thread and the encoder created for said virtual desktop block.

4. The method of claim 3, wherein the client reproduces each frame of picture of the virtual desktop of the server by performing the decompression process, the integration process and the displaying process on the small stream frames received in the following manner:
receiving, by the client, the small stream frames sent from the server, creating a decoding-displaying thread and a decoder for the small stream frames, and sending the small stream frames received to a corresponding buffer queue; and
performing the decompression process, the integration process and the displaying process, by the client, on the small stream frames in the corresponding buffer queue by using the decoding-displaying thread and the decoder created for the small stream frames to reproduce each frame of picture of the virtual desktop of the server.

5. The method of claim 3, wherein performing the decompression process, the integration process and the displaying process, by the client, on the small stream frames in the corresponding buffer queue by using the decoding-displaying thread and the decoder created for the small stream frames comprises:
retrieving, by the client, the small stream frames from the corresponding buffer queue by using the decoding-displaying thread created for the small stream frames, and performing the decompression process on the small stream frames through the decoder to obtain desktop transcoded data corresponding to the small stream frames; and
performing the integration process, by the client, on all desktop transcoded data to obtain transcoded data of the entire virtual desktop, and performing the displaying process, by the client, on the obtained transcoded data of the entire virtual desktop.

6. A system for displaying virtual desktop data, comprising a server (201) and a client (202), wherein the server (201) comprises:
a division module (2011) configured to divide a virtual desktop into a plurality of virtual desktop blocks of equal size according to resolution of the virtual desktop, wherein each of the virtual desktop blocks corresponds to a small desktop stream and multiple small desktop frames;
a compressed encoding module (2012) configured to perform compressed encoding on the multiple small desktop frames corresponding to one of the virtual desktop blocks to encapsulate the multiple small desktop frames into small stream frames corresponding to the small desktop stream; and
a sending module (2013) configured to send the small stream frames to the client (202) so that the client (202) reproduces each frame of picture of the virtual desktop of the server (201) by performing a decompression process, an integration process and a displaying process on the small stream frames received.

7. The system of claim 6, wherein the sending module (2013) comprises:
a detection unit configured to detect a current frame of desktop picture of each of the virtual desktop blocks to determine whether the current frame of desktop picture of one of the virtual desktop blocks differs from a previous frame of desktop picture of said virtual desktop block; and
a sending unit;
wherein in response to determining that the current frame of desktop picture of the virtual desktop block differs from the previous frame of desktop picture of said virtual desktop block, the server (201) performs compressed encoding on multiple small desktop frames corresponding to said virtual desktop block to encapsulate the multiple small desktop frames into the small stream frames corresponding to the small desktop stream, wherein the sending unit is configured to send the small stream frames to the client (202).

8. The system of claim 6 or 7, wherein the compressed encoding module (2012) comprises:
a creation unit configured to create a compressed encoding thread and an encoder for each of the virtual desktop blocks according to the plurality of virtual desktop blocks; and
a compressed encoding unit configured to perform compressed encoding on the multiple small desktop frames corresponding to one of the virtual desktop blocks by using the compressed encoding thread and the encoder created for said virtual desktop block.

9. The system of claim 8, wherein the client (202) comprises:
a creation and buffer module (2021) configured to, based on the small stream frames received, create a decoding-displaying thread and a decoder for the small stream frames, and send the small stream frames received to a corresponding buffer queue; and
a processing and displaying module (2022) configured to perform a decompression process, an integration process and a displaying process on the small stream frames in the corresponding buffer queue by using the decoding-displaying thread and the decoder created for the small stream frames to reproduce each frame of picture of the virtual desktop of the server (201).

10. The system of claim 9, wherein the processing and displaying module (2022) comprises:
a processing unit configured to retrieve the small stream frames from the corresponding buffer queue by using the decoding-displaying thread created for the small stream frames, and to perform the decompression process on the small stream frames through the decoder to obtain desktop transcoded data corresponding to the small stream frames; and
a displaying unit configured to perform the integration process on all desktop transcoded data to obtain transcoded data of the entire virtual desktop, and to perform displaying process on the obtained transcoded data of the entire virtual desktop.

11. A computer-readable storage medium storing computer-executable instructions which, when executed by a processor, cause the processor to perform the method of any one of claims 1 to 5.
